# EUROPÄISCHE PATENTSCHRIFT

(11) **EP 2 697 547 B1**
(45) Veröffentlichungstag und Bekanntmachung des Hinweises auf die Patenterteilung: **09.09.2015**
(21) Anmeldenummer: 12737222.5
(22) Anmeldetag: 19.07.2012
(51) Int. Cl.: F16K 31/122, F16K 31/124, F16K 37/00, F16K 31/126

(54) **VENTILMODUL**
VALVE MODULE
MODULE DE SOUPAPE

(30) Priorität: 22.07.2011 DE 102011108179
(43) Veröffentlichungstag der Anmeldung: 19.02.2014
(73) Patentinhaber: Festo AG & Co. KG, 73734 Esslingen (DE)
(72) Erfinder: MAICHL, Martin, 73084 Salach (DE); WIRTL, Hannes, 86956 Schongau (DE); DICKHOFF, Andreas, 73230 Kirchheim/Teck (DE)
(74) Vertreter: Patentanwälte Magenbauer & Kollegen Partnerschaft mbB
(86) Internationale Anmeldenummer: PCT/EP2012/003051
(87) Internationale Veröffentlichungsnummer: WO 2013/013796

(56) Entgegenhaltungen:
- WO-A1-2005/036039
- WO-A2-2007/118674

## Beschreibung

Die Erfindung betrifft ein Ventilmodul zur Beeinflussung einer Fluidversorgung eines fluidisch betreibbaren Verbrauchers, mit einem Ventilgehäuse, das einen Ventilraum mit einer fluidisch kommunizierenden Verbindung zu einem Eingangsanschluss und einem Ausgangsanschluss und eine Vorsteuerkammer mit einer fluidisch kommunizierenden Verbindung zu einem Arbeitsanschluss bestimmt, sowie mit einem beweglich im Ventilraum aufgenommenen Ventilglied, das zwischen einer Blockierstellung und einer Freigabestellung einstellbar ist, um einen freien Strömungsquerschnitt zwischen dem Eingangsanschluss und dem Ausgangsanschluss zu beeinflussen, und mit einem beweglich in der Vorsteuerkammer aufgenommenen Stellglied, das mit dem Ventilglied bewegungsgekoppelt ist, so dass eine Position des Stellglieds und des damit gekoppelten Ventilglieds in Abhängigkeit von einer Druckbeaufschlagung der Vorsteuerkammer einstellbar ist, sowie mit einer Sensoreinrichtung zur Ermittlung einer Position des Ventilglieds und/oder des Stellglieds längs einer Bewegungsachse.

Aus der WO 2007/118674 A2 ist eine Ventileinrichtung bekannt, bei der eine Stellung eines Ankers oder Ventilkolbens mittels eines Hubsensors ermittel wird. Bei dem Hubsensor kann es sich um einen induktiven kontaktlosen Sensor handeln, der außerhalb eines Ankerraums angeordnet ist.

Die Aufgabe der Erfindung besteht darin, eine Ventileinrichtung mit einer kompakten Aufbauweise bereitzustellen.

Diese Aufgabe wird für eine Ventileinrichtung der eingangs genannten Art mit den Merkmalen des Anspruchs 1 gelöst.

Erfindungsgemäß ist vorgesehen, dass die Sensoreinrichtung eine elektrische Spulenanordnung umfasst, die wenigstens einen Fluidanschluss aus der Gruppe Arbeitsanschluss, Eingangsanschluss, Ausgangsanschluss ringartig umgibt. Bei der Spulenanordnung kann es sich exemplarisch um eine Flachspule auf einer gedruckten Leiterplatte oder um eine gewickelte Drahtspule handeln. Bei der Flachspule sind die Windungen spiralförmig angeordnet, gegebenenfalls auch in mehreren parallel zueinander angeordneten Leiterbahnebenen. Bei der Drahtspule sind die Windungen vorzugsweise aus isoliertem Draht hergestellt und auf einen Wickelkern aufgewickelt. Vorzugsweise ist der Wickelkern rohrförmig ausgebildet und dient als Anschlussstutzen für einen der fluidischen Anschlüsse aus der Gruppe Arbeitsanschluss, Eingangsanschluss, Ausgangsanschluss. Hierdurch wird eine kompakte Gestaltung der Sensoreinrichtung ermöglicht, zudem kann dadurch gewährleistet werden, dass die Spulenanordnung möglichst nahe am Stellglied und/oder Ventilglied angeordnet werden kann, so dass die gegenseitige Beeinflussung des von der Spule ausgesendeten Magnetfelds durch die Relativbewegung zwischen Spulenanordnung und Stellglied/Ventilglied möglichst stark ist und damit eine kleine Spule und/oder ein geringer Energiefluss durch die Spule ausreichend ist.

Weitere vorteilhafte Weiterbildungen der Erfindung sind in den Unteransprüchen angegeben.

Zweckmäßig ist es, wenn eine Windungsachse der Spulenanordnung und die Bewegungsachse des Ventilglieds und/oder des Stellglieds zumindest im Wesentlichen parallel, insbesondere konzentrisch, zueinander ausgerichtet sind. Vorzugsweise sind das Stellglied und gegebenenfalls auch das Ventilglied für eine lineare Bewegung längs der Bewegungsachse ausgebildet. Bei paralleler Ausrichtung der Windungsachse der Spulenanordnung, also derjenigen Achse, die eine Symmetrieachse für alle oder eine Mehrzahl der Windungen der Spulenanordnung bildet, mit der Bewegungsachse ist ein zumindest bereichsweise proportionaler Zusammenhang zwischen der Änderung des Abstands zwischen Ventilglied/Stellmittel und Spulenanordnung und der Änderung des magentischen Felds der Spulenanordnung und der damit in Beziehung stehenden elektrischen Kennwerte, insbesondere des Spulenstroms, gewährleistet.

Bei einer Weiterbildung der Erfindung ist vorgesehen, dass eine Windungsachse der Spulenanordnung und eine Erstreckungsachse des Fluidanschlusses zumindest im Wesentlichen parallel, insbesondere konzentrisch, zueinander ausgerichtet sind. Hierdurch lässt sich eine besonders kompakte Bauweise für die Spulenanordnung und den Fluidanschluss erzielen.

Vorteilhaft ist es, wenn das Ventilglied und/oder das Stellglied zumindest einen elektrisch leitenden Bereich aufweisen. Hierdurch wird eine zuverlässige, abstandsabhängige Einflussnahme durch das Ventilglied und/oder das Stellglied auf das magnetisch Feld der Spulenanordnung erzielt.

Bevorzugt umfasst die Sensoreinrichtung eine Wechselstromquelle zur Bereitstellung einer hochfrequenten Wechselspannung an die Spulenanordnung sowie eine Impedanzmesseinrichtung zur Ermittlung der Impedanz der Spulenanordnung. Durch die Bereitstellung des hochfrequenten Wechselstroms an die Spulenanordnung wird von der Spulenanordnung ein magnetisches Wechselfeld abgestrahlt, das mit dem Ventilglied und/oder dem Stellglied in Wechselwirkung tritt, da im Ventilglied und/oder im Stellglied ein Wirbelstrom induziert wird. Durch den induzierten Wirbelstrom ändert sich der Wechselstromwiderstand der Spule, also deren Impedanz. Durch Änderung der relativen Lage des Ventilglieds und/oder des Stellglieds gegenüber der Spulenanordnung verändert sich auch die magnetische Feldstärke für die Einwirkung auf das Ventilglied und/oder das Stellglied, so dass auch die Impedanz der bestromten Spulenanordnung verändert wird. Diese Veränderung wird durch eine Impedanzmesseinrichtung ermittelt, bei der es sich exemplarisch um einen Strommesser zur Ermittlung des Spulenstroms durch die Spulenanordnung handeln kann.

In weiterer Ausgestaltung der Erfindung ist vorgesehen, dass die Spulenanordnung an einem Abschlussteil aufgenommen ist, das zusammen mit dem Ventilgehäuse die Vorsteuerkammer begrenzt und das einen Fluidkanal umfasst, der als Arbeitsanschluss für eine fluidische Versorgung der Vorsteuerkammer ausgebildet ist. Das Abschlussteil hat somit mehrere Funktionen, insbesondere die endseitige fluidische Begrenzung der Vorsteuerkammer, die Bereitstellung des Fluidkanals zwischen Arbeitsanschluss und Vorsteuerkammer sowie die Bereitstellung einer mechanischen Abstützung für die Spulenanordnung in der Art eines Wickelkerns.

Zweckmäßig ist es, wenn zwischen dem Abschlussteil und dem Stellglied eine abdichtend in der Vorsteuerkammer aufgenommene Membran angeordnet ist, die für eine zuverlässige Abtrennung des Fluidstroms durch den Ventilraum vom Fluidstrom in die Vorsteuerkammer dient. Hierdurch wird eine zusätzliche fluidische Sperre zwischen dem für die Ansteuerung des Ventilglieds vorgesehenen, druckbeaufschlagten Fluid, das in die Vorsteuerkammer einströmt, und dem vom Ventilmittel zu steuernden Fluidstrom erreicht. Dies ist insbesondere für Anwendungen von Vorteil, bei denen ein Kontakt zwischen dem Arbeitsfluid in der Vorsteuerkammer und dem Fluidstrom durch die Ventilkammer vermieden werden soll, beispielsweist bei Fluidströmen, die als Nahrungsmittel oder als Grundstoff für Nahrungsmittel Verwendung finden sollen.

Eine vorteilhafte Ausführungsform der Erfindung ist in der Zeichnung dargestellt. Hierbei zeigt:
- Figur 1: eine Schnittdarstellung eines Ventilmoduls mit einer Sensoreinrichtung und
- Figur 2: eine Detaildarstellung eines Ausschnitts aus der Figur 1.

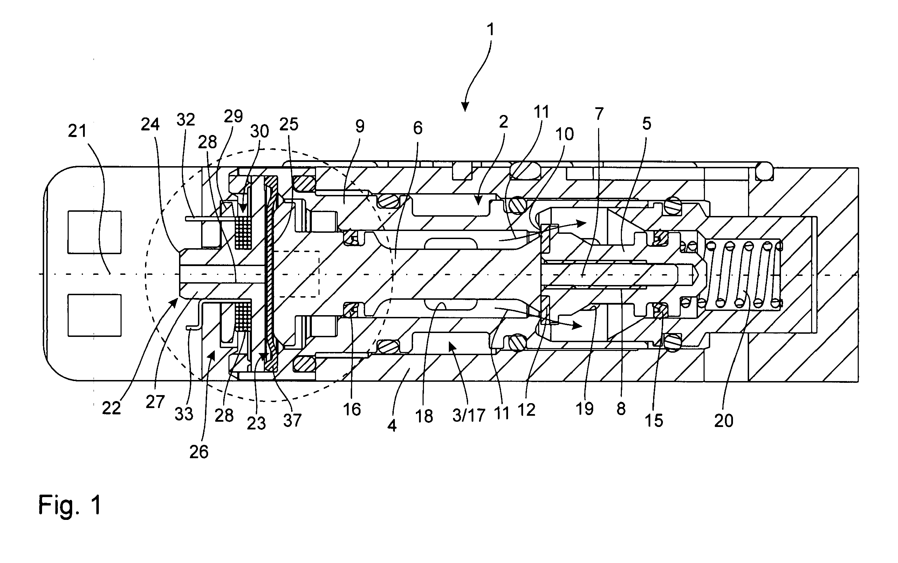

Eine Schnittdarstellung eines Ventilmoduls 1 gemäß der Figur 1 zeigt einen exemplarisch zweiteilig ausgebildeten Ventilkörper 2, der schiebebeweglich in einer Ventilausnehmung 3 eines Ventilgehäuses 4 aufgenommen ist. Der Ventilkörper 2 umfasst ein Ventilglied 5 und ein Stellglied 6, die fest miteinander verbunden sind. Hierzu sind am Stellglied 6 ein Gewindeabschnitt 7 und im Ventilglied 5 ein korrespondierendes Gewindesackloch 8 ausgebildet. Der Ventilkörper 2 ist schiebebeweglich in einem Ventileinsatz 9 geführt, der seinerseits in der Ventilausnehmung 3 festgelegt ist und der einen ringförmigen Ventilsitz 10 umfasst. Da der Ventilkörper 2 für die Beeinflussung eines freien Strömungsquerschnitts durch einen vom Ventilsitz 10 berandeten Strömungskanal 11 dient, ist zwischen dem Ventilglied 5 und dem Stellglied 6 eine ringförmig umlaufende Dichtscheibe 12 angeordnet, die in der Ruhestellung gemäß der Figur 1 für eine abdichtende und damit den Strömungskanal 11 blockierende Anlage am Ventilsitz 10 ausgebildet ist. Sowohl das Ventilglied 5 als auch das Stellglied 6 sind exemplarisch gegenüber dem Ventileinsatz 9 jeweils mit einem Lippendichtring 15, 16 abgedichtet und begrenzen somit zusammen mit dem Ventileinsatz 9 und dem Ventilgehäuse 4 einen Druckraum 17. Der Druckraum 17 steht über eine erste Ausnehmung 18 mit einem ersten, nicht näher dargestellten Versorgungskanal in fluidisch kommunizierender Verbindung. Zudem steht der Druckraum 17 über eine zweite Ausnehmung 19 mit einem ebenfalls nicht näher dargestellten Ausgangskanal in fluidisch kommunizierender Verbindung. Durch die Wechselwirkung zwischen Ventilglied 5 und Ventilsitz 10 kann eine fluidisch kommunizierende Verbindung zwischen der ersten Ausnehmung 18 und der zweiten Ausnehmung 19 längs des Strömungskanals 11 wahlweise freigegeben oder blockiert werden.

Dem Ventilglied 5 ist an einem dem Stellglied 6 abgewandten Endbereich eine Druckfeder 20 zugeordnet, die in der dargestellten Ruhestellung des Ventilmoduls 1 eine Blockierung des Strömungskanals 11 vorgibt. Für eine Freigabe des Strömungskanals 11 ist eine translatorische Relativbewegung des Ventilglieds 5 und des damit gekoppelten Stellglieds 6 längs der Mittelachse 21 des Ventilmoduls 1 erforderlich. Hierbei muss die Rückstellkraft der Druckfeder 20 überwunden werden. Hierzu ist das Stellglied 6 in einer durch den Ventileinsatz 9 und eine Abschlussplatte 22 bestimmten Vorsteuerkammer 23 aufgenommen. In der Abschlussplatte 21 ist ein Arbeitskanal 24 ausgebildet, durch den eine Fluidzufuhr und Fluidabfuhr in die bzw. aus der Vorsteuerkammer 23 erfolgen kann. Für eine vorteilhafte Abdichtung zwischen dem Druckraum 17 und der Vorsteuerkammer 23 ist zwischen dem Ventileinsatz 9 und der Abschlussplatte 22 eine Dichtmembran 25 eingefügt. Somit wird bei einer Druckbeaufschlagung der Vorsteuerkammer 23 eine Auslenkung des Stellglieds 6 und des damit gekoppelten Ventilglieds 5 bewirkt, wodurch die Dichtscheibe 12 vom Ventilsitz 10 abgehoben wird und der Strömungskanal 11 durch den Druckraum 17 freigegeben wird. Das hierzu benötigte druckbeaufschlagte Fluid wird beispielsweise von einem nicht dargestellten Vorsteuerventil an den Arbeitsanschluss 24 des Ventilmoduls 1 bereitgestellt.

Die Abschlussplatte 22 ist exemplarisch zumindest im Wesentlichen rotationssymmetrisch zur Mittelachse 21 ausgebildet und umfasst einen Anschlussstutzen 27, der von einem Arbeitskanal 28 durchsetzt ist. Der Arbeitskanal 28 ist für eine fluidisch kommunizierende Verbindung zwischen der Vorsteuerkammer 23 und dem Arbeitsanschluss 24 ausgebildet und exemplarisch als gerade Bohrung mit zylindrischem Querschnitt ausgebildet. Am Anschlussstutzen 27 ist einen umlaufend ausgebildeter Stützring 29 angebracht, der zusammen mit der Abschlussplatte 22 eine Ringnut bestimmt, in der die Spulenanordnung 30 aufgenommen ist. Dabei bildet der Anschlussstutzen 27 den Wickelkern für Spulenwindungen 31 der Spulenanordnung 30, die ihrerseits Teil einer Sensoreinrichtung 26 ist.

Die Spulenwindungen 31 werden durch Aufwickeln eines isolierten Drahtstücks auf den Anschlussstutzen 27 gebildet. Schematisch dargestellte Drahtenden 32, 33 der Spulenanordnung 30 sind mit einer Wechselstromquelle 34 und einer in Reihe zur Wechselstromquelle 34 geschalteten Strommesseinrichtung 35 verbunden, die ebenfalls Teil der Sensoreinrichtung 26 sind.

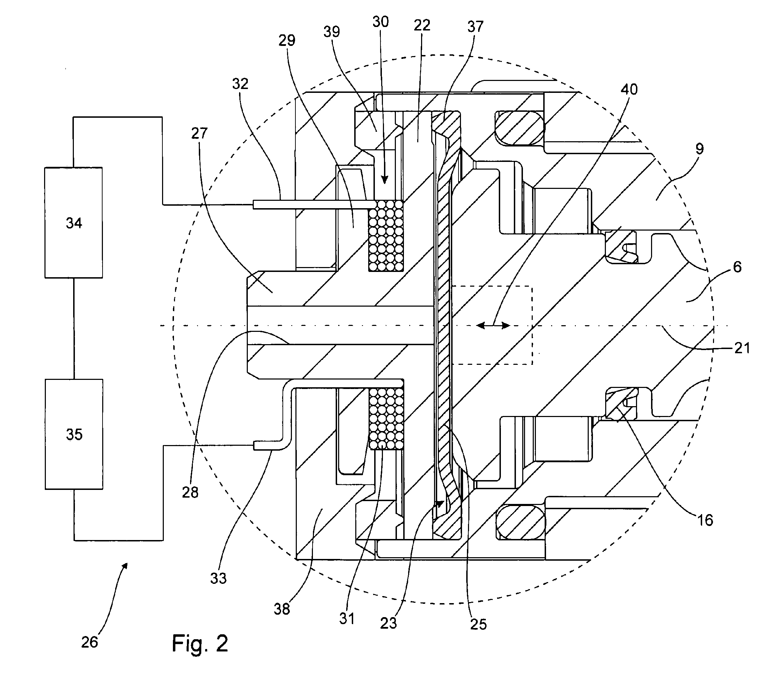

Die Wechselstromquelle 34 ist zur Bereitstellung eines hochfrequenten Wechselstroms an die Spulenanordnung 30 ausgebildet, um Wirbelströme im Ventilglied 5 und/oder im Stellglied 6 hervorzurufen, sofern diese aus einem metallischen Werkstoff hergestellt sind. Sofern weder das Ventilglied 5 noch das Stellglied 6 aus einem metallischen Werkstoff hergestellt sein sollten, kann auch vorgesehen sein, in das Stellglied 6 oder das Ventilglied 5 einen Metallkörper zu integrieren, wie dies durch das gestrichelt eingezeichnete Rechteck in der Figur 2 angedeutet ist.

Das von der Spulenanordnung 30 bei Beaufschlagung mit Wechselstrom abgegebene Magnetfeld wird durch die induzierten Wirbelströme derart beeinflusst, dass bei einem geringen Abstand zwischen der Spulenanordnung 30 und dem Ventilglied 5 und dem Stellglied 6 ein größerer Einfluss der Wirbelströme auf das Spulenmagnetfeld der Spulenanordnung 30 vorliegt, als dies bei einem größeren Abstand axialen Abstand längs der Mittelachse 21 zwischen der Spulenanordnung 30 und dem Ventilglied 5 und dem Stellglied 6 der Fall ist.

Bei geringerem Einfluss der Wirbelströme wird eine von der Wechselstromquelle 34 aufgeprägte zeitliche Änderung des Spulenmagnetfelds weniger gebremst, so dass ein höherer Spulenstrom fließen kann, der von der Strommesseinrichtung 35 ermittelt wird. Somit kann die Strommesseinrichtung 35 ein vom axialen Abstand zwischen Spulenanordnung 30 und dem Ventilglied 5 und dem Stellglied 6 abhängiges Messsignal bereitstellen, das in einer Auswerteeinrichtung 36 in ein analoges oder digitales Abstandssignal gewandelt wird und an eine nicht näher dargestellte Ventilsteuereinrichtung oder Ventilregeleinrichtung bereitgestellt werden kann.

Die Platzierung der Spulenanordnung 30 konzentrisch zum Anschlussstutzen 27 ermöglicht einen geringen axialen Abstand zwischen der Spulenanordnung 30 und dem Ventilglied 5 sowie dem Stellglied 6. Zudem dient der Anschlussstutzen 27 als Wickelkern und stabilisiert die Spulenanordnung 30. Desweiteren wird der ohnehin vorzusehende freie Innendurchmesser der Spulenanordnung 30 als Durchgang für den Arbeitskanal 28 genutzt, wodurch eine besonders kompakte Bauweise für das Ventilmodul 1 mit integrierter Spulenanordnung 30 erreicht wird.

Die Dichtmembran 25, die zur Abtrennung des Arbeitsfluids, das in der Vorsteuerkammer 23 bereitgestellt wird, vom Prozessfluid, das den Druckraum 17 durchströmt, ist zwischen einem stirnseitigen Endbereich des Ventileinsatzes 9 und einer gegenüberliegend angeordneten Stirnfläche der Abschlussplatte 22 geklemmt. Für eine vorteilhafte Dichtwirkung der Dichtmembran 25 gegenüber den zugeordneten Stirnflächen von Ventileinsatz 9 und Abschlussplatte 22 ist an der Dichtmembran 25 eine umlaufende Wulst 37 vorgesehen, der nach der Montage der Abschlussplatte 22 an das Ventilgehäuse 4 in einem ringförmigen Bereich eine hohe Flächenpressung und damit eine vorteilhafte Dichtwirkung für die Dichtmembran 25 gewährleistet. Die Flächenpressung der Wulst 37 wird durch die Abschlussplatte 22 bereitgestellt, die ihrerseits von einer stirnseitig am Ventileinsatz 9, insbesondere stoffschlüssig, angebrachten Deckplatte 38 gehalten wird. Die Deckplatte 38 komprimiert mit einer der Abschlussplatte 22 zugewandten Innenfläche einen Dichtring 39, der seinerseits an einer der Deckplatte 38 zugewandten Oberfläche der Abschlussplatte 22 anliegt. Die Deckplatte 38 wird von den Drahtenden 32, 33 der Spulenanordnung 30 durchsetzt. Da die Spulenanordnung 30 nicht in einem druckbeaufschlagten Bereich angeordnet ist, kann auf eine Abdichtung der Durchführungen für die Drahtenden 32, 33 verzichtet werden.

Die Dichtmembran 25 ist derart ausgebildet, dass sie innerhalb des im Wesentlichen von der Geometrie des Ventilglieds 5 und des Ventileinsatzes 9 vorgegebenen Ventilhubs 40 lediglich elastisch deformiert wird.

## Patentansprüche

1. Ventilmodul zur Beeinflussung einer Fluidversorgung eines fluidisch betreibbaren Verbrauchers, mit einem Ventilgehäuse (4), das einen Ventilraum (17) mit einer fluidisch kommunizierenden Verbindung zu einem Eingangsanschluss (18) und einem Ausgangsanschluss (19) und eine Vorsteuerkammer (23) mit einer fluidisch kommunizierenden Verbindung zu einem Arbeitsanschluss (24) bestimmt, sowie mit einem beweglich im Ventilraum (17) aufgenommenen Ventilglied (5), das zwischen einer Blockierstellung und einer Freigabestellung einstellbar ist, um einen freien Strömungsquerschnitt zwischen dem Eingangsanschluss (18) und dem Ausgangsanschluss (19) zu beeinflussen, und mit einem beweglich in der Vorsteuerkammer (23) aufgenommenen Stellglied (6), das mit dem Ventilglied (5) bewegungsgekoppelt ist, so dass eine Position des Stellglieds (6) und des damit gekoppelten Ventilglieds (5) in Abhängigkeit von einer Druckbeaufschlagung der Vorsteuerkammer (23) einstellbar ist, sowie mit einer Sensoreinrichtung (26) zur Ermittlung einer Position des Ventilglieds (5) und/oder des Stellglieds (6) längs einer Bewegungsachse (21), **dadurch gekennzeichnet, dass** die Sensoreinrichtung (26) eine elektrische Spulenanordnung (30) umfasst, die wenigstens einen Fluidanschluss aus der Gruppe Arbeitsanschluss (24), Eingangsanschluss (18), Ausgangsanschluss (19) ringartig umgibt.

2. Ventilmodul nach Anspruch 1, **dadurch gekennzeichnet, dass** eine Windungsachse der Spulenanordnung (30) und die Bewegungsachse des Ventilglieds (5) und/oder des Stellglieds (6) zumindest im Wesentlichen parallel zueinander ausgerichtet sind.

3. Ventilmodul nach Anspruch 1 oder 2, **dadurch gekennzeichnet, dass** eine Windungsachse der Spulenanordnung (30) und eine Erstreckungsachse des Fluidanschlusses (18, 19, 24) zumindest im Wesentlichen parallel zueinander ausgerichtet sind.

4. Ventilmodul nach Anspruch 1, 2 oder 3, **dadurch gekennzeichnet, dass** das Ventilglied (5) und/oder das Stellglied (6) zumindest einen elektrisch leitenden Bereich aufweisen.

5. Ventilmodul nach einem der vorhergehenden Ansprüche, **dadurch gekennzeichnet, dass** die Sensoreinrichtung (26) eine Wechselstromquelle (34) zur Bereitstellung einer hochfrequenten Wechselspannung an die Spulenanordnung (30) sowie eine Impedanzmesseinrichtung (35) zur Ermittlung der Impedanz der Spulenanordnung (30) umfasst.

6. Ventilmodul nach einem der vorhergehenden Ansprüche, **dadurch gekennzeichnet, dass** die Spulenanordnung (30) an einem Abschlussteil (22) aufgenommen ist, das zusammen mit dem Ventilgehäuse (4) die Vorsteuerkammer (23) begrenzt und das einen Fluidkanal (28) umfasst, der als Arbeitsanschluss (24) für eine fluidische Versorgung der Vorsteuerkammer (23) ausgebildet ist.

7. Ventilmodul nach Anspruch 6, **dadurch gekennzeichnet, dass** zwischen dem Abschlussteil (22) und dem Stellglied (6) eine abdichtend in der Vorsteuerkammer (23) aufgenommene Membran (25) angeordnet ist, die für eine zuverlässige Abtrennung des Fluidstroms durch den Ventilraum (17) vom Fluidstrom in die Vorsteuerkammer (23) dient.

8. Ventilmodul nach Anspruch 2, **dadurch gekennzeichnet, dass** die Windungsachse der Spulenanordnung (30) und die Bewegungsachse des Ventilglieds (5) und/oder des Stellglieds (6) konzentrisch zueinander ausgerichtet sind.

9. Ventilmodul nach Anspruch 3, **dadurch gekennzeichnet, dass** die Windungsachse der Spulenanordnung (30) und eine Erstreckungsachse des Fluidanschlusses (18, 19, 24) konzentrisch zueinander ausgerichtet sind.

## Claims

1. Valve module for controlling a fluid supply to a fluidically operable load, with a valve casing (4) which defines a valve chamber (17) with a fluidically communicating connection to an inlet port (18) and an outlet port (19) and a pilot chamber (23) with a fluidically communicating connection to an operating port (24), together with a valve member (5) held movably in the valve chamber (17) and adjustable between a blocking position and a release position in order to control a free flow cross-section between the inlet port (18) and the outlet port (19), and with an actuator (6) mounted movably in the pilot chamber (23) and movement-coupled to the valve member (5), so that a position of the actuator (6) and the valve member (5) connected to it may be adjusted depending on the pressurisation of the pilot chamber (23), also with a sensor device (26) for determining a position of the valve member (5) and/or the actuator (6) along a movement axis (21), **characterised in that** the sensor device (26) includes an electrical coil assembly (30), which surrounds in a ring-like manner at least one fluidic port from the group comprising the operating port (24), the inlet port (18) and the outlet port (19).

2. Valve module according to claim 1, **characterised in that** a winding axis of the coil assembly (30) and the movement axis of the valve member (5) and/or the actuator (6) are aligned at least substantially parallel to one another.

3. Valve module according to claim 1 or 2, **characterised in that** a winding axis of the coil assembly (30) and an extension axis of the fluidic port (18, 19, 24) are aligned at least substantially parallel to one another.

4. Valve module according to claim 1, 2 or 3, **characterised in that** the valve member (5) and/or the actuator (6) have at least one electrically conductive area.

5. Valve module according to any of the preceding claims, **characterised in that** the sensor device (26) includes an AC supply (34) to provide a high-frequency AC voltage at the coil assembly (30), and also an impedance measuring device (35) to determine the impedance of the coil assembly (30).

6. Valve module according to any of the preceding claims, **characterised in that** the coil assembly (30) is accommodated at a terminating section (22) which, together with the valve casing (4), bounds the pilot chamber (23), and includes a fluid passage (28) which as operating port (24) is designed for fluidic supply of the pilot chamber (23).

7. Valve module according to claim 6, **characterised in that** there is provided, between the terminating section (22) and the actuator (6), a membrane (25) held with sealing in the pilot chamber (23) and serving for reliable separation of the fluid flow through the valve chamber (17) from the fluid flow into the pilot chamber (23).

8. Valve module according to claim 2, **characterised in that** the winding axis of the coil assembly (30) and the movement axis of the valve member (5) and/or the actuator (6) are concentric to one another.

9. Valve module according to claim 3, **characterised in that** the winding axis of the coil assembly (30) and an extension axis of the fluidic port (18, 19, 24) are concentric to one another.

## Revendications

1. Module de soupape servant à influencer une alimentation en fluide d'un consommateur à fonctionnement fluidique, comprenant un carter de soupape (4), qui définit un volume de soupape (17) pourvu d'une liaison de communication fluidique avec un raccord d'entrée (18) et un raccord de sortie (19) ainsi qu'une chambre de commande préalable (23) pourvue d'une liaison de communication fluidique avec un raccord de travail (24), comprenant également un organe de soupape (5) logé de manière mobile dans le volume de soupape (17), lequel peut être ajusté entre une position bloquée et une position débloquée afin d'influencer une section transversale d'écoulement libre entre le raccord d'entrée (18) et le raccord de sortie (19), et comprenant un organe de réglage (6) logé de manière mobile dans la chambre de commande préalable (23), lequel est couplé en mouvement avec l'organe de soupape (5) de sorte qu'une position de l'organe de réglage (6) et de l'organe de soupape (5) couplé à ce dernier peut être ajustée en fonction d'une pression appliquée par la chambre de commande préalable (23), comprenant également un système de détection (26) servant à déterminer une position de l'organe de soupape (5) et/ou de l'organe de réglage (6) le long d'un axe de déplacement (21), **caractérisé en ce que** le système de détection (26) comprend un ensemble de bobines (30) électrique, qui entoure à la manière d'une bague au moins un raccord de fluide issu du groupe comprenant le raccord de travail (24), le raccord d'entrée (18), le raccord de sortie (19).

2. Module de soupape selon la revendication 1, **caractérisé en ce qu'**un axe d'enroulement de l'ensemble de bobines (30) et l'axe de déplacement de l'organe de soupape (5) et/ou de l'organe de réglage (6) sont orientés au moins essentiellement de manière parallèle l'un par rapport à l'autre.

3. Module de soupape selon la revendication 1 ou 2, **caractérisé en ce qu'**un axe d'enroulement de l'ensemble de bobines (30) et un axe d'extension du raccord de fluide (18, 19, 24) sont orientés au moins essentiellement de manière parallèle l'un par rapport à l'autre.

4. Module de soupape selon la revendication 1, 2 ou 3, **caractérisé en ce que** l'organe de soupape (5) et/ou l'organe de réglage (6) présentent au moins une zone électroconductrice.

5. Module de soupape selon l'une quelconque des revendications précédentes, **caractérisé en ce que** le système de détection (26) comprend une source de courant alternatif (34) servant à fournir une tension alternative à haute fréquence à l'ensemble de bobines (30) ainsi qu'un système de mesure d'impédance (35) servant à déterminer l'impédance de l'ensemble de bobines (30).

6. Module de soupape selon l'une quelconque des revendications précédentes, **caractérisé en ce que** l'ensemble de bobines (30) est logé au niveau d'une partie de terminaison (22), qui délimite, conjointement avec le carter de soupape (4), la chambre de commande préalable (23) et qui comprend un canal de fluide (28), qui est réalisé sous la forme d'un raccord de travail (24) pour une alimentation en fluide de la chambre de commande préalable (23).

7. Module de soupape selon la revendication 6, **caractérisé en ce qu'**une membrane (25) logée de manière à assurer l'étanchéité dans la chambre de commande préalable (23) est disposée entre la partie de terminaison (22) et l'organe de réglage (6), laquelle membrane sert à isoler avec fiabilité le flux de fluide traversant le volume de soupape (17) du flux de fluide dans la chambre de commande préalable (23).

8. Module de soupape selon la revendication 2, **caractérisé en ce que** l'axe d'enroulement de l'ensemble de bobines (30) et l'axe de déplacement de l'organe de soupape (5) et/ou de l'organe de réglage (6) sont orientés de manière concentrique l'un par rapport à l'autre.

9. Module de soupape selon la revendication 3, **caractérisé en ce que** l'axe d'enroulement de l'ensemble de bobines (30) et un axe d'extension du raccord de fluide (18, 19, 24) sont orientés de manière concentrique l'un par rapport à l'autre.
